Europäisches Patentamt

European Patent Office

Office européen des brevets

(11) Veröffentlichungsnummer: **0 280 183**

**A1**

(12) **EUROPÄISCHE PATENTANMELDUNG**

(21) Anmeldenummer: 88102327.9

(22) Anmeldetag: 18.02.88

(51) Int. Cl.4: **C25B 3/10** , //C07D207/00,
C07D333/00,C07C87/52

(30) Priorität: 21.02.87 DE 3705647

(43) Veröffentlichungstag der Anmeldung:
31.08.88 Patentblatt 88/35

(84) Benannte Vertragsstaaten:
BE DE FR GB NL

(71) Anmelder: BASF Aktiengesellschaft
Carl-Bosch-Strasse 38
D-6700 Ludwigshafen(DE)

(72) Erfinder: Naarmann, Herbert, Dr.
Haardtblick 15
D-6719 Wattenheim(DE)

(54) **Verfahren zur Herstellung von elektrisch leitfähigen elastischen Produkten.**

(57) Verfahren zur Herstellung von elektrisch leitfähigen elastischen Produkten durch anodische Oxidation von Verbindungen aus der Klasse der Pyrrole oder Thiophene oder von Anilin oder dessen Derivaten, wobie die Monomere in Elektrolytlösungsmittel in Gegenwart eines Leitsalzes und in Gegenwart von Latices von natürlichen oder synthetischen Kautschuken anodisch oxidiert und dadurch polymerisiert werden.

EP 0 280 183 A1

## Verfahren zur Herstellung von elektrisch leitfähigen elastischen Produkten

Die Erfindung betrifft ein Verfahren zur Herstellung von elektrisch leitfähigen elastischen Produkten durch anodische Oxidation von Monomeren aus der Klasse der 5-gliedrigen heterocyclischen Verbindungen, die Stickstoff oder Schwefel als Heteroatom und ein konjugiertes $\Pi$-Elektronensystem enthalten oder von Verbindungen aus der Klasse der aromatischen Monamine in Elektrolytlösungsmitteln in Gegenwart von Leitsalzen und Latices.

Die elektrochemische Polymerisation von 5-gliedrigen heterocyclischen Verbindungen ist bekannt (vgl. z.B. US-PS 3 574 072). Nach Arbeiten von A.F. Diaz et al, J.C.S. Chem. Comm. 1979, Seite 635; J.C.S. Chem. Comm. 1979, Seite 854 und ACS Org. Coat. Plast. Chem. 43 (1980) werden bei der anodischen Polymerisation von Pyrrol in Gegenwart von Leitsalzen Filme mit elektrischen Leitfähigkeiten bis zu $10^2 \bullet S \bullet cm^{-1}$ gebildet. Hierbei handelt es sich um p-leitende Polypyrrole, wobei als Gegenanionen vor allem $BF_4^-$, $ASF_6^-$, $ClO_4^-$ und $HSO_4^-$ genannt werden.

Aus der DE-OS 32 23 544(= EP-OS 99 984) ist ein Verfahren zur Herstellung elektrisch leitfähiger Copolymerisate von Pyrrol mit anderen heterocyclischen Verbindungen, wie Thiophen oder Furan und deren Derivate bekannt. Die Polymerisation wird in Gegenwart von Leitsalzen durchgeführt, so daß man p-gedopte Polymerisation erhält mit hoher elektrischer Leitfähigkeit und einem hohen mechanischen Niveau, die gegenüber bekannten elektrisch leitfähigen Pyrrolpolymersystemen ein verbessertes Eigenschaftsbild aufweisen.

Es war außerdem bekannt, daß Polyanilin elektrische Leitfähigkeiten besitzt, so daß es in Form von Filmen oder Folien als ektrischer Leiter verwendet werden kann (M. Jozefowicz und R. Buvet, Chim. Macromol. 1, S. 469 ff (1970). Das U.K.-Patent 1 216 549 beschreibt die Verwendung bestimmter Formen des Polyanilins als Anode oder Kathode in elektrochemischen Speichern oder Batterien.

Aufgabe der vorliegenden Erfindung ist es, ein neues Verfahren zur Herstellung von elektrisch leitfähigen elastischen Produkten durch anodische Oxidation von Monomeren aus der Klasse der 5-gliedrigen heterocyclischen Verbindungen, die Stickstoff oder Schwefel als Heteroatom und ein konjugiertes Elektrodensystem enthalten oder von Verbindungen der Klasse der aromatischen Monamine zu schaffen, das Produkte mit neuen Eigenschaften liefert.

Es wurde nun gefunden, daß die Aufgabe durch ein Verfahren der ionischen Oxidation der genannten monomeren Verbindungen in Elektrolytlösungsmitteln gegebenenfalls in Gegenwart von Leitsalzen gelöst wird, bei dem man die anodische Oxidation der Monomeren in Gegenwart von Latices von natürlichen oder synthetischen Kautschuken durchführt.

Unter Verbindungen aus der Klasse der 5-gliedrigen heterocyclischen Verbindungen mit einem konjugierten $\Pi$-Elektronensystem, die Stickstoff oder Schwefel als Heteroatom enthalten, die als Monomere im Rahmen dieser Erfindung vewendet werden können, sollen Verbindungen aus der Klasse der Pyrrole und der Thiophene verstanden werden.

Verbindungen aus der Klasse der Pyrrole sind das unsubstituierte Pyrrol selber als auch die substituierten Pyrrole, wie die N-Alkylpyrrole, N-Arylpyrrole, die an den C-Atomen monoalkyl-oder dialkylsubstituierten Pyrrole und die an den C-Atomen monohalogen-oder dihalogensubstituierten Pyrrole. Bei der Herstellung der erfindungsgemäßen Copolymeren können die Pyrrole allein oder in Mischung miteinander eingesetzt werden, so daß die Copolymere ein oder mehrere verschiedene Pyrrole enthalten können. Vorzugsweise leiten sich die wiederkehrenden Pyrrol-Einheiten in den Copolymeren im wesentlichen von unsubstituiertem Pyrrol selber ab.. Werden substituierte Pyrrole bei der Herstellung eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Verbindungen aus der Klasse der Thiophene sind das unsubstituierte Thiophen selbst, das 2-, oder 3-, Methylthiophen, das 2-, 3-, Ethylthiophen oder andere alkylsubstituierte Thiophene, ebenso die 2fach mit Alkyl substituierten Thiophene, wie 2,3-Diethylthiophen oder auch die chlorsubstituierten Thiophene, wie 2-Chlor-oder 3-Bromthiophen, 3,4-Dichlorthiophen. Ebenso kommen Phenylthiophene, wie 2-Phenylthiophen oder das 3-Benzylthiophen in Frage.

Als Monomere, die anodisch oxidiert werden können, kommen auch aromatische Monoamine, wie Anilin und dessen Abkömmlinge in Frage, aus denen sich Polyanilin bildet.

Die Polymerisation dieser Monomeren wird in Gegenwart von Latices von natürlichen oder synthetischen Kautschuken vorgenommen. Unter Latices werden Emulsionen oder Dispersionen der natürlichen oder synthetischen Kautschuke verstanden. Es handelt sich dabei um Polymere des Isoprens oder Butadiens. Besonders geeignet sind neben Naturkautschuk die Copolymerisate des Butadiens mit z.B. Styrol und/oder Acrylnitril. Die Latices enthalten zwischen 5 und 60 Gew.% der Polymeren.

Zur Herstellung der Polymerisate werden die Monomeren anodisch oxidiert und dabei polymerisiert. Die Gesamtmonomerkonzentration betreibt hierbei im allgemeinen zwischen 0,01 bis 1 Mol/l Flüssigphase.

Die flüssige Phase kann auch Lösungsmittel enthalten. Als Lösungsmittel für die Monomeren und gegebenenfalls die Elektrolyten können protisch aprotisch sein. Bevorzugte Lösungsmittel sind z.B. Azeton, Azetronitril, Dimethylformamid, Dimethylsulfoxid, Ethylenchlorid, N-Methylchlorid, Methylpyrrolidon oder Propylencarbonat. Mitunter kann auch Wasser verwendet werden oder Mischungen oder Dispersionen dieser Lösungsmittel mit Wasser. Die flüssige Phase enthält 0,1 bis 100 Teile Lösungsmittel auf 100 bis 10 Teile Latex. Das Verhältnis flüssige Phase zu Kautschuk (Trockengewicht) soll zwischen 100 bis 1 Teile flüssige Phase auf 1 Teil Kautschuk sein.

Es können zusätzlich Leitsalze dem System zugesetzt werden. Als Leitsalze dienen bevorzugt ionische oder ionisierbare Verbindungen mit Anionen starker, oxidierender Säuren oder auch von, gegebenenfalls mit Nitro-Gruppen substituierten Aromaten mit sauren Gruppen. Als Kationen für diese Leitsalze kommen neben den Erdalkalimetall-Kationen und $H^+$, insbesondere die Alkalimetall-Kationen, vorzugsweise $Li^+$, $Na^+$ oder $K^+$, in Betracht. Sehr günstig sind die Onium-Kationen, vor allem des Stickstoffs und des Phosphors, etwa des Typs $R^4N^+$ und $R^4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise 6 bis 14 C-Atomen, bedeutet. Unter den Ammonium-und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem $NH_4^+$-Ion insbesondere das Tetramethylammonium-, das Tetraethylammonium-, das Tetra-n-butylammonium-, das Triphenylphosphonium-und das Tri-n-butylphosphonium-Kation genannt.

Als Anionen für das Leitsalz haben sich $BF_4^-$, $AsF_4^-$, $R\text{-}SO_3^-$, $AsF_6^-$, $SbF_6^-$, $SbCl_6^-$, $ClO_4^-$, $HSO_4^-$ und $SO_4^{2-}$ als günstig erwiesen. Eine weitere Gruppe von Leitsalz-Anionen, bei dem erfindungsgemäß Verfahren mit besondererem Vorteil eingesetzt werden, leiten sich sulfatierten Fettalkoholen oder von Aromaten mikt sauren Gruppen ab. Hierzu gehören das $C_6H_5COO^-$-Anion sowie insbesondere die Anionen von gegebenenfalls mit Alkylgruppen substituierten aromatischen Sulfonsäuren. Wegen der damit erzielbaren guten Ergebnisse sind Leitsalze mit dem Benzolsulfonsäure-Anion

$C_6H_5SO_3^-$-oder von aromatischen Di oder Oligosulfonsäuren ganz besonders bevorzugt. Es können auch solche Leitsalze verwendet werden, die Emulgatoren sind.

Die Leitsalzkonzentration beträgt in dem erfindungsgemäßen Verfahren im allgemeinen 0,001 bis 1, vorzugsweise 0,01 bis 0,1 Mol/Liter flüssiger Phase.

Bei dem Verfahren zur Herstellung der Produkte aus den genannten Verbindungen wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Nickel, Titan, Aluminium oder Edelstahl bestehen. Es können auch Edelmetallelektroden, bevorzugt Platinelektroden, verwendet werden. Dabei ist es günstig, wenn zumindest die Anode, insbesondere aber beide Elektroden, flächig ausgebildet sind, so daß sich die Produkte in Form eines Filmes abscheiden. Außer der erwähnten einfachen elektrolytischen Zelle ohne Diaphragma können auch andere Elektrolyseeinrichtungen für das erfindungsgemäße Verfahren Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (mA/s) zweckmäßig.

Normalerweise führt man die elektrolytische Oxidation bei Raumtemperatur und unter Inertgas durch. Da sich die Reaktionstemperatur bei der Polymerisation der Gemische als unkritisch erwiesen hat, kann die Temperatur jedoch in einem breiten Bereich variiert werden, solange die Erstarrungstemperatur bzw. Siedetemperatur des Elektrolytlösungsmittels nicht unter-bzw. überschritten wird. Im allgemeinen hat sich eine Reaktionstemperatur im Bereich von -40 bis +40°C, vorzugsweise bie +18 bis +25°C, als sehr vorteilhaft erwiesen.

Als Stromquelle für den Betrieb der elektrolytischen Zelle, in der das erfindungsgemäße Verfahren durchgeführt wird, eignet sich jede Gleichstromquelle, wie z.B. eine Batterie, die eine hinreichend hohe elektrische Spannung liefert. Zweckmäßigerweise liegt die Spannung im Bereich von etwa 1 bis 25 Volt; als besonders vorteilhaft haben sich Spannungen im Bereich von etwa 2 bis 12 Volt erwiesen. Die Stromdichte liegt üblicherweise im Bereich von 0,05 bis 100 mA/cm², vorzugsweise im Bereich von 0,1 bis 15 mA/cm².

Die während der elektrolytischen Oxidation anodisch abgeschiedenen erfindungsgemäß hergestellten elastischen Produkte werden zur Entfernung von anhaftendem Leitsalz mit Lösungsmitteln gewaschen und bei Temperaturen von 30 bis 150°C, vorzugsweise unter Vakuum, getrocknet. Bei Einsatz von Graphit-, Edelmetall-oder ähnlichen Elektroden lassen sich danach die im allgemeinen filmförmig abgeschiedenen Produkte leicht von der Elektrode ablösen, vor allem wenn Schichtstärken über 50 μm abgeschieden wurden.

Die erfindungsgemäß erhaltenen elektrisch leitfähigen Produkte sind elastisch, d.h. sie lassen sich dehnen oder biegen und nehmen anschließend ihre ursprüngliche Form wieder an. Man kann die Gebilde auch vulkanisieren. Die elektrische Leitfähigkeit liegt zwischen $10^{-6}$ und 10 S/cm. Die leitfähigen Produkte können z.B. zur Herstellung von Kautschuken, Gehäusen Bezugsstoffen oder Handschuhen dienen.

Die Erfindung wird durch die nachfolgenden Beispiele näher erläutert. Die in den Beispielen angegebenen Teile sind Prozente und beziehen sich, sofern nicht anders vermerkt, auf das Gewicht.

Beispiel 1

Eine Mischung aus 3 Teilen Natriumdodecylsulfat, 10 Teilen Pyrrol und 100 Teilen Naturlatex, der 60 Gew.% Naturkautschuk enthält, werden in eine Elektrolysenzelle gegeben. Die Elektroden bestehen aus Platin und sind in einem Abstand von 2 cm angeordnet. Bei einer Anodenstromdichte von 10mA/cm² und einer Zellenspannung von 4,5V kann nach einer Elektrolysedauer von 12 Stunden ein 70μm dicker elastischer Film an der Anode abgenommen werden. Dieser Film hat eine Leitfähigkeit von 10 S/cm.

Beispiel 2

2 Teile Polystyrolsulfonat-Natrium (Molekulargewicht 700 000) 10 Teile Pyrrol und 100 Teile Naturlatex der 50% Kautschuk enthält, werden in der Elektrolysezelle gemäß Beispiel 1 gegeben. Bei einer Anodenstromdichte von 10mA/cm² entsteht innerhalb von 12 Stunden ein 70μm dicker elastischer Film, der Kautschuk und Polypyrrol enthält und der eine Leitfähigkeit von 0,5 S/cm hat.

Beispiel 3

Es wird wie in Beispiel 1 gearbeitet, jedoch anstelle eines Naturlatex ein Copolymerisat aus Butadien und Styrol im Verhältnis 70:30 Mol% verwendet, der 50 Gew.% des Synthesekautschuks enthält. Unter den angegebenen Bedingungen wird ein 60μm - dicker Film erhalten, der eine Leitfähigkeit von 0,5 S/cm hat.

Beispiel 4

5 Teile Natriumdodecylsulfat, 10 Teile Pyrrol, das in 10 Teilen Essigsäurenitril gelöst ist, werden in 100 Teilen Naturlatex (50%ig) emulgiert. Mit einer Elektrolysenzelle nach Beispiel 1 wird nach 12 Stunden bei einer Stromdichte von 4mA/cm² ein 30μm dicker, elastischer Film erhalten. Die Leitfähigkeit des Films beträgt 0,2 S/cm.

Ansprüche

1. Verfahren zur Herstellung von elektrisch leitfähigen elastischen Produkten durch anodische Oxidation von Monomeren aus der Klasse der 5-gliedrigen heterocyclischen Verbindungen, die Stickstoff oder Schwefel als Heteroatom und ein konjugiertes Π-Elektronensystem enthalten oder von Verbindungen aus der Klasse der aromatischen Monamine in Elektrolytlösungsmitteln, gegebenenfalls in Gegenwart von Leitsalzen, dadurch gekennzeichnet, daß man die anodische Oxidation der Monomeren in Gegenwart von Latices von natürlichen oder synthetischen Kautschuken durchführt.

2. Verfahren nach Anspruch 1, dadurch gekennzeichnet, daß man als Monomeres Pyrrol, Thiophen oder Anilin verwendet.

Europäisches
Patentamt

**EUROPÄISCHER RECHERCHENBERICHT**

Nummer der Anmeldung

EP 88102327.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | CHEMICAL ABSTRACTS, Band 106, Nr. 6, 9. Februar 1987, Columbus, Ohio, USA<br><br>S.J. JASNE et al. "Electro-chemical polymerization of pyrrole in the presence of latexes," Seite 628, Spalte 2 und Seite 629, Spalte 1, Zusammenfassung-Nr. 42 135k<br><br>& Synth. Met. 1986, 15(2-3.), 175-82<br><br>-- | 1,2 | C 25 B   3/10<br>// C 07 D 207/00<br>C 07 D 333/00<br>C 07 C 87/52 |
| A | EP - A2 - 0 167 798 (BASF)<br>  * Anspruch 1; Seite 2, Zeilen 4-8 *<br><br>-- | 1,2 | |
| D,A | EP - A1 - 0 099 984 (BASF)<br>  * Ansprüche 1,7 *<br><br>---- | 1,2 | RECHERCHIERTE SACHGEBIETE (Int. Cl. 4)<br><br>C 25 B |

Der vorliegende Recherchenbericht wurde für alle Patentansprüche erstellt.

| Recherchenort | Abschlußdatum der Recherche | Prüfer |
|---|---|---|
| WIEN | 17-05-1988 | LUX |